# EUROPÄISCHE PATENTSCHRIFT

(11) **EP 1 210 150 B1**
(45) Veröffentlichungstag und Bekanntmachung des Hinweises auf die Patenterteilung: **22.06.2005**
(21) Anmeldenummer: 00918565.3
(22) Anmeldetag: 18.04.2000
(51) Int. Cl.: A63B 69/00, A63B 69/36

(54) **SPORT-TRAININGS-VORRICHTUNG SOWIE SPORT-TRAININGS-SYSTEM**
SPORTS TRAINING APPARATUS AND SPORTS TRAINING SYSTEM
DISPOSITIF ET SYSTEME D'ENTRAINEMENT SPORTIF

(30) Priorität: 21.04.1999 AT 26799
(43) Veröffentlichungstag der Anmeldung: 05.06.2002
(73) Patentinhaber: Wagner, Herrmann, 2721 Bad Fischau (AT)
(72) Erfinder: Wagner, Herrmann, 2721 Bad Fischau (AT)
(74) Vertreter: Laminger, Norbert, Mag.
(86) Internationale Anmeldenummer: PCT/AT2000/000096
(87) Internationale Veröffentlichungsnummer: WO 2000/062874

(56) Entgegenhaltungen:
- EP-A- 0 641 574
- US-A- 5 082 281
- US-A- 5 258 785
- US-A- 5 372 365
- US-A- 5 871 406

## Beschreibung

Die Erfindung betrifft eine Trainings-Vorrichtung für Sportarten, bei welchen ein Ball od. dgl. mit einem Schläger od. dgl. gespielt wird, umfassend einen programmierbaren Mikrocomputer und eine Akustikeinrichtung in einem Gehäuse in Form einer Armbanduhr, und zumindest eine Eingabeeinrichtung, bei welcher zumindest ein Teil zum Starten des Programmablaufes des Mikrocomputers durch einen Druckschalter in einer über einen Finger des Sportlers stülpbaren Kappe gebildet ist, wobei der Mikrocomputer über die Eingabeeinrichtung zur Ausgabe von sportspezifische Bewegungsabläufe vorgebenden akustischen Signalen über die akustischen Ausgabeeinrichtungen, vorzugsweise Kopfhörer oder Ohrhörer, und zur Veränderung dieser Signale in Dauer, Abstand und Qualität ansteuerbar ist, sowie ein Trainings-System für derartige Sportarten mit einer derartigen Vorrichtung.

Ein Trainingssystem, das Tonsignale erzeugt, um zu helfen beispielsweise beim Golfsport optimale Leistungen zu erzielen, ist aus der US-3808707-A bekannt. Dabei variiert ein Tonsignal in Übereinstimmung mit der Muskelspannung und -bewegung in bezug auf Frequenz, Intensität und Dauer. Der Benutzer programmiert ein Signal für eine "Idealbewegung" ein und hat dann eine Vorgabe für seine durchzuführende Bewegung während der Sportausübung. Dabei ist aber durch die ganze Apparatur zur Bestimmung der Muskelspannung und -bewegung ein für die Praxis und regelmäßige Benutzung zu großer Aufwand notwendig. Ähnliches gilt auch für die Sporttrainiervorrichtung der EP-0 587 622 B1, bei der auch Tonsignale verschiedener Qualität und Dauer für Bewegungen unterschiedlicher Körperteile des Sportlers vorgesehen sind. Dabei ist auch nachteilig, daß sich der Sportler viele unterschiedliche Tonsignale merken und mit Körperteilen und -bewegungen verknüpfen muß, was die Konzentration sehr erschwert. Überdies ist diese Vorrichtung sehr unhandlich und kompliziert zu bedienen, was den regelmäßigen Gebrauch während des Trainings und/oder überall auf dem Spielfeld oder Gelände der Ausübung des Sportes, beispielsweise dem Golfplatz, in der Praxis fast unmöglich macht. Die Vorrichtung zum Training speziell des Golfsportes der WO92/12768-A1 beinhaltet in relativ aufwendiger Weise eine Reihe von an verschiedenen Teilen der Ausrüstung angebrachten und vom Golfsportler zu tragenden Sensoren, die auf viele unterschiedliche Veränderungen während des Golfschwunges reagieren und durch Veränderung von über einen funkgespeisten Kopfhörer ausgegebenen akustischen Signalen auf Abweichungen von vorgegebenen Werten aufmerksam machen. Auch diese vielen überwachten Parameter führen, neben einem großen apparativen Aufwand, zu einer Überforderung und Ablenkung des Sportlers und daher ist auch diese Vorrichtung in der Praxis nur bedingt anwendbar.

Die Aufgabe der vorliegenden Erfindung war daher eine Trainings-Vorrichtung, die für den dauerhaften, praktischen Gebrauch geeignet, klein, leicht, relativ einfach und unkompliziert zu gebrauchen sowie auch mental unterstützend für die Ausübung des Sports ist.

Zur Lösung dieser Aufgabe ist erfindungsgemäß vorgesehen, daß die Akustikeinrichtung einen Sprachgenerator zur Erzeugung von zumindest zwei unterschiedlichen Wörtern umfaßt, daß der Druckschalter zur Auslösung des Programmablaufes des Mikrocomputers mit einem Funksender versehen ist, und daß im oder am den Mikrocomputer enthaltenden Gehäuse ein Funkempfänger vorhanden und mit dem Mikrocomputer verbunden ist. Dabei helfen diese Wörter im Gegensatz zu unpersönlichen und oftmals sogar ablenkenden Tonsignalen auch bei der Konzentration und der mentalen Vorbereitung auf die optimale Bewegung, zum Beispiel den optimalen Golfschwung. Schließlich ist auch durch die Ausbildung als wie eine Armbanduhr tragbare Vorrichtung der geringstmögliche Störungseinfluß beim Ausüben des Sports gegeben und auch gewährleistet, daß die Vorrichtung ohne große Belastungen bei jedem Training und auf dem gesamten Platz oder Sportgelände mitgeführt und genutzt werden kann. Die einfache Betätigung über den unmittelbar bei einem Finger gehaltenen Schalter lenkt nicht ab und gestattet dem Sportler die volle Konzentration auf die auszuführende Bewegung, etwa einen Golfschwung, während die Übertragung zumindest des Startsignals für den Mikrocomputer durch Funk störende oder durch die Bewegung leicht beschädigbare Kabelverbindungen vermeidbar macht.

Da man im speziellen für den Golfsport herausgefunden hat, daß der Rückschwung zum Ausholen und der Durchschwung zum Schlagen des Golfballs gleich lang dauern sollen, kann in besonders einfacher und sofort erlernbarer Weise durch zwei unterschiedliche Wörter mit im wesentlichen gleicher Dauer für diese beiden Schwungbewegungen dem Gotfsportler die optimale Bewegung vorgegeben werden, ohne daß dieser erst langwierig Verknüpfungen mit Körperteilen und -bewegungen erlernen muß.

Vorteilhafterweise ist die akustische Ausgabeeinrichtung in Form eines Kopfhörer oder Ohrhörers mit einem Funkempfänger versehen und ist ein entsprechender Funksender im oder am Gehäuse vorgesehen. Damit ist auch hier die Vermeidung von Konzentrationsstörungen durch lose Kabel gewährleistet und die Gefahr der Beschädigung der Vorrichtung minimiert.

Um die Konzentration und die Vorbereitung auf die optimale Bewegung weiter zu erleichtern, kann vorgesehen sein, daß am Gehäuse zumindest eine optische Anzeigeeinrichtung für den Bewegungsablauf vorgesehen und mit dem Mikrocomputer über einen entsprechenden Anzeigetreiber verbunden ist. Speziell beim Einstimmen vor der eigentlichen Bewegung, z. B. einem Golfschwung, ist die zusätzliche optische Anzeige und Vorgabe für die meisten, optisch betonten Menschen eine gute Einstellungs- und Konzentrationshilfe.

Selbstverständlich können vorteilhafterweise auch wichtige andere Daten dem Sportler zur Verfügung gestellt werden, wenn weitere optische Anzeigen für weitere Spielparameter, beispielsweise die Spieldauer, vorgesehen sind. Auch eine Spiefstandsanzeige bzw. ein manuell zu betätigender Spielstands-Schreiber, eine Stoppuhr und/oder eine herkömmliche Uhr könnte vorgesehen sein.

In besonders vorteilhafter Weise ist gemäß einem weiteren Erfindungsmerkmal im oder am Gehäuse ein Neigungs-, Beschleunigungs- oder Fliehkraftsensor vorgesehen und mit dem Mikrocomputer verbunden, der ein Programm enthält, das aus den Daten dieses Sensors verschiedene sportspezifische Werte errechnet und die Ausgabe- bzw. Anzeigeeinrichtungen zur akustischen und/oder optischen Ausgabe dieser Werte ansteuert. Ein derartiges Zusatzmeßinstrument erlaubt die über den Microcomputer die Berechnung weiterer wichtiger Daten für den Sportler, die diesem wertvolle Hilfen für seine Aufstellung, Ausrichtung und auch die Auswertung der durchgeführten Bewegung, etwa des durchgeführten Golfschwunges, geben können. So kann vor dem Schwung über die Neigung des Golfschlägers in der Hand des Sportlers Abweichungen vom richtigen Abstand zum liegenden Golfball angezeigt werden. Durch Mitverfolgen der Werte des Neigungsmessers während des Schwunges kann - für vorgegebene oder eingebbare Werte von Schlägerlängen - eine Ermittlung der Schlägerkopfgeschwindigkeit stattfinden und dieser Wert angezeigt werden. Vorteilhafterweise scheint dabei beispielsweise die Schwunglänge und/oder die -geschwindigkeit zur Kontrolle auch nach dem eigentlichen Schwung selbst auf der optischen Anzeige auf, auf der aber auch nur allfällige Abweichungen von voreingestellten Idealwerten und/oder deren Betrag dargestellt werden können.

Eine besonders vorteilhafte und unauffällige Anbringung in einem oftmals ohnedies vorhandenen Ausrüstungsteil des Sportlers ist gegeben, wenn die über den Finger stülpbare Kappe mit dem Teil der Eingabeeinrichtung Teil eines Handschuhs, beispielsweise eines Fingers dieses Handschuhs, ist. Insbesondere für den Golfsport sind Handschuhe ein fast immer vorhandener Teil der Ausrüstung, welcher sich für die Anbrindung der Eingabeeinrichtung ideal anbietet.

Ein weiterer wichtiger Bewegungsablauf ist beispielsweise beim Golf die Oberkörperdrehung vor und während des Golfschwunges, welche mit einem erweiterten Trainings-System kontrolliert werden kann, das eine Vorrichtung gemäß einem der vorhergehenden Absätze umfaßt und gekennzeichnet ist durch einen ersten, vorzugsweise batteriebetriebenen Funksender mit Stabantenne, welche mittels Hafteinrichtungen auf der Kleidung des Sportlers anbringbar ist, und einen zweiten, davon beabstandeten Funkempfänger/-sender zum Empfang der Signale des ersten Funksenders und zur Weiterleitung an den Mikrocomputer der Trainings-Vorrichtung, wobei der Mikrocomputer ein Programm enthält, das aus der Stärke der Signale zwischen Funksender und Funkempfänger/-sender die relative Ausrichtung dieser beiden Teile zueinander berechnet und die Ausgabe- bzw. Anzeigeeinrichtungen zur akustischen und/oder optischen Ausgabe dieser Werte ansteuert. Aus der relativen Ausrichtung von Stabantenne und dem externen Funkempfänger, kann über die Veränderung der Signalstärke die Verdrehung des Oberkörpers des Sportlers ermittelt und die Einhaltung der empfohlenen Verdrehung kontrolliert bzw. Abweichungen davon akustisch und/oder optisch angezeigt werden. Auch bei anderen Sportarten kann mit einem derartigen System die notwendige oder vorteilhafte - allenfalls auch unerwünschte - Verdrehung von Körperpartien relativ zueinander ermittelt und angezeigt werden.

Der zweite Funkempfänger/-sender ist dabei gemäß einer ersten Ausführungsform als externes transportables Bauteil ausgeführt, jedoch zumindest zeitweilig stationär, was beispielsweise durch die Anbringung an oder Integration in eine Sporttasche realisierbar ist. Damit ist eine geringere Belastung des Sportlers durch an ihm oder seiner Bekleidung angebrachter Teile verbunden und auch die Beschädigungsgefahr während der Sportausübung kann damit verringert werden.

Gemäß einer weiteren Ausführungsform ist der zweite Funkempfänger/-sender mittels Hafteinrichtungen od dgl. an der Kleidung des Sportlers anbringbar. Beispielsweise kann eine Befestigung an den Schuhen vorgesehen sein, sodaß bei eingenommenem Stand die Verdrehung des Körperteils mit der Stabantenne relativ zu den Füßen ermittelt werden kann.

Eine weitere erfindungsgemäße Ausführungsform des Trainings-Systems ist gekennzeichnet durch einen Inertialsensor und einen damit verbundenen, vorzugsweise batteriebetriebenen Funksender zur Übermittlung der Werte des Inertialsensors an den Mikrocomputer, wobei der Inertialsensor mittels Hafteinrichtungen auf der Kleidung des Sportlers anbringbar ist und wobei der Mikrocomputer ein Programm enthält, das aus der Veränderung der Signale des Inertialsensors dessen Lageveränderung berechnet und die Ausgabe- bzw. Anzeigeeinrichtungen zur akustischen und/oder optischen Ausgabe dieser Werte ansteuert. Damit ist ein externer Funkempfänger/-sensor gänzlich vermeidbar und der Sportler hat die größtmögliche Bewegungsfreiheit sowie keinerlei Ablenkung von der Sportausübung durch Auf- oder Umstellen eines Ausrüstungsgegenstandes mit dem externen Funkempfänger/-sensor.

In der nachfolgenden Beschreibung soll ein bevorzugtes Ausführungsbeispiel der Erfindung in einer speziellen Ausführung für den Golfsport näher erläutert werden. Selbstverständlich ist aber die Anwendung bei allen Sportarten, bei welchen ein Ball od. dgl. mit einem Schläger od. dgl. gespielt werden, in vorteilhafter Weise möglich, etwa zur Verbesserung des Bewegungsablaufes beim Baseball, Tennis, etc.

Die Golf-Trainings-Vorrichtung besteht in der Grundausstattung aus drei Teilen. Ein Gehäuse in Form und ungefährer Größe einer Armbanduhr ist mit dem Mikrocomputer, einem Generator für die akustischen Signale, insbesondere einem Sprachchip, und allenfalls einer oder mehreren herkömmlichen optischen Anzeigeeinrichtungen mit analogen und/oder digitalen Anzeigefeldern, allenfalls auch durch eine Anzahl von Leuchtdioden od. dgl. Dabei ist insbesondere auch eine Uhr und/oder eine Stoppuhr und/oder ein Spielstands-, Runden- und Schlagzählers, vorgesehen. Weiters sind im Gehäuse, das mittels eines Befestigungsbandes od. dgl. wie eine herkömmliche Uhr am Handgelenk getragen werden kann, ein Funkempfänger und -sender sowie Betätigungselemente zur Programmierung und/oder zum Abruf von im Mikrocomputer gespeicherten Programmen und Vorgaben für bestimmte Parameter, beispielsweise bestimmter Schlägertypen oder Schwunglängen und -zeiten für sogenannte "slow hitter" oder "fast hitter", sowie zur Eingabe von anzuzeigenden und/oder zu speichernden Werten, beispielsweise dem Spielstand, integriert. Diese liegen vorzugsweise in Form von Druckknöpfen und/oder Drehknöpfen vor, die vorzugsweise seitlich am Umfang des Gehäuses angeordnet sind. Auch für andere Sportarten außer Golf ist eine gleichartige Ausführung - natürlich mit speziell auf diese Sportart ausgelegten Anzeigen - vorgesehen.

Der Funkempfänger nimmt vom zweiten Teil der Vorrichtung, das ist ein über eine Art Kappe an einem Finger des Golfsportiers befestigbarer Druckschalter mit einem Funksender, dessen Signale zum Start oder zur Einstellung bestimmter Betriebsmodi auf und leitet diese an den Mikrocomputer weiter. Der Schalter kann dabei auch in oder an einem Golfhandschuh integriert sein, vorzugsweise am Ende des Teils für einen Finger des Sportlers, so daß in diesem Fall die Kappe durch diesen Teil des Handschuhs gebildet ist. Dabei ist von Vorteil, daß der Schalter sehr sicher und gut an genau definierter Stelle gehalten ist. Die Energie zum Betrieb des Funksenders stammt aus einer kleinen Batterie, ebenso wie die Energie zum Betrieb des Mikrocomputers, der akustischen Einrichtungen und der Anzeigeeinrichtung(en) im Gehäuse aus einer weiteren Batterie im Gehäuse bezogen wird. In gleicher Weise bietet sich die Anordnung eines Druckschalters an einer über einen Finger gestülpten Kappe bei jeder Sportart an, bei der ein Schläger gehalten wird.

Der dritte Teil der Vorrichtung ist ein über Funk ansteuerbarer Kopf-oder Ohrhörer, ausgestattet mit einem Empfänger, einer Antenne und auch einer weiteren Batterie, über welchen der Golfsportler die akustischen Signale des Sprachchips abhören kann. Obwohl ein herkömmlicher Lautsprecher im Gehäuse denkbar ist, wird vorteilhafterweise ein Ohr- oder Kopfhörer verwendet, da dessen Signale weniger von Außengeräuschen gestört und für den Sportler klarer hörbar sind und andere Sportler in ihrer Konzentration nicht gestört werden.

Insbesondere für den Golfsport ist der Sprachgenerator zur Erzeugung von zwei unterschiedlichen Wörtern von im wesentlichen gleicher Dauer mit einer kurzen Pause dazwischen ausgelegt, welche die Dauer von Rückschwung, Durchschwung und der dazwischen liegenden Pause bei der Richtungsumkehr, vorgeben sollen, da man herausgefunden hat, daß der Rückschwung zum Ausholen und der Durchschwung zum Schlagen des Golfballs gleich lang sein sollen. Durch geeignete Wahl der erzeugten und dem Golfsportler abgespielten Wörter kann aber nicht nur die optimale Bewegung für jeden Spielertyp vorgegeben werden, was über beispielsweise mehrere wählbare, in der zeitlichen Dauer abgestufte Varianten erfolgen kann, sondern diese Wörter können auch durch ihren Wortklang und -sinn bei der Konzentration und der mentalen Vorbereitung auf den optimalen Golfschwung helfen. Durch optische Hilfestellung über eine optische Anzeige, beispielsweise über eine der Wortlänge entsprechend lang aufleuchtende Anzeige, zusätzlich zu den Sprachsignalen kann für die meisten, optisch betonten Menschen eine zusätzliche gute Einstellungs- und Konzentrationshilfe vor dem eigentlichen Schwung erzielt werden. Nach Durchführung des Schwunges kann über die optische Anzeige auch ein Vergleich zwischen dem vorgegebenen Wert für den Schwung und dessen tatsächlicher Dauer, auch separat für die beiden Teilbewegungen, gegeben und durch den Sportler ausgewertet werden. Doch auch bei anderen Sportarten sind unterschiedlich weite oder gerichtete Bewegungen vorteilhaft, die trotzdem gleich lang dauern sollen, so daß auch hier die auch mentale Unterstützung zur gleichmäßigen Ausführung dieser Bewegungsabfolgen durch die erfindungsgemäße Anordnung von Vorteil ist.

In besonders vorteilhafter Weise ist weiters im oder am Gehäuse ein Neigungssensor vorgesehen und mit dem Mikrocomputer verbunden. Dabei enthält der Mikrocomputer dann auch ein Programm, das diesen Sensor einmal nach Betätigung einer Eingabevorrichtung oder entsprechend einem Programmablauf zu mehreren Zeitpunkten abfrägt und aus dessen Daten einen oder mehrere golfspezifische Parameter errechnet sowie die Ausgabe- bzw. Anzeigeeinrichtungen zur akustischen und/oder optischen Ausgabe dieser Werte ansteuert. So liefert der Neigungssensor beispielsweise vor dem Schwung über die Handhaltung auch einen Wert für die Neigung des Golfschlägers, woraus über eine fix vorprogrammiert oder über die Eingabevorrichtung eingebbare Länge dieses Schlägers der Abstand zum liegenden Golfball bzw. Abweichungen vom richtigen Abstand hörbar gemacht bzw. optisch angezeigt werden können.

Wenn die Zeitdauer bestimmt wird, während der sich die Werte für die Neigung verändern, kann aufgrund dieser Werte des Neigungsmessers und der abgelaufenen Zeit die Geschwindigkeit des Schlägerkopfes ermittelt werden. Wiederum kann dabei eine durchschnittliche Schlägerlänge vorprogrammiert oder eine Schlägerlänge eingegeben werden, allenfalls auch nur durch Auswahl eines Wertes aus einigen vorgegebenen Werten. Auch die Schwunglänge ist über den Beginn und das Ende der sich verändernden Neigungswerte in bezug auf die Zeit ableitbar. Die Werte für die Schlägerkopfgeschwindigkeit könnten beispielsweise auch durch Auswertung der Daten eines Beschleunigung- oder Fliehkraftsensors durch das Programm im Mikrocomputer ermittelt werden.

Ein wichtiger Parameter beim Golfschwung ist die Verdrehung des Oberkörpers beim Golfschwung. Diese Verdrehung kann mit einem erweiterten Golf-Trainings-System kontrolliert werden, das zusätzlich zu den oben beschriebenen Bestandteilen einen vorzugsweise batteriebetriebenen weiteren Funksender umfaßt, der mit einer Stabantenne versehen und mittels Hafteinrichtungen auf der Kleidung des Golfsportiers anbringbar ist. Die Anbringung muß dabei im wesentlichen horizontal und sollte vorteilhafterweise in einer Linie mit den Schultern des Sportlers erfolgen. Weiters ist ein je nach Bedarf ein- und ausschaftbarer externer Funkempfänger/-sender vorhanden, vorzugsweise an oder in einer Golftasche, der die Signale des Funksenders vom Golfspieler empfängt, wobei je nach relativer Stellung von Stabantenne und Funkempfänger die Signalstärke variiert. Der Mikrocomputer kann über ein darin gespeichertes Programm aus der Stärke der ihm vom Funksender in beispielsweise der Golftasche weitergeleiteten Signale die relative Ausrichtung dieser beiden Teile zueinander berechnen und die Ausgabe- bzw. Anzeigeeinrichtungen zur akustischen und/oder optischen Anzeige der Übereinstimmung mit oder Abweichung von den optimalen oder vorgegebenen Werten ansteuern. Wichtig dabei ist, daß der Golfsportier den Funkempfänger/-sender immer an der gleichen Stelle relativ zu sich aufstellt.

Anstelle den externen Funkempfänger/-sender an einer Sporttasche oder ähnlichem, separat mitzuführenden Gegenstand zu binden, kann alternativ dazu dieser externe Funkempfänger/-sender auch an einer anderen Körperpartie des Sportlers anbringbar sein, vorzugsweise wieder an dessen Kleidung. Im Falle der oben beispielhaft erläuterten Ermittlung der richtigen Verdrehung des Oberkörpers könnte der zweite Funkempfänger/-sender etwa an einem der Schuhe des Golfsportlers oder auch beiden Schuhen anbringbar sein. Es ist aber auch denkbar, daß durch nur einen einzigen Inertialsensor, zum Beispiel mit einem Kreisel, dessen räumliche Ausrichtung vor Durchführung der Bewegung als Referenzwert gespeichert wird und dessen Lageveränderung über einen mit ihm verbundenen Funksender dem Mikrocomputer mitgeteilt wird, die besagte Oberkörperverdrehung des Golfsportlers dokumentiert wird. Weitere Möglichkeiten der Messung von Relatiwerdrehungen beinhalten die Verwendung von magnetischen oder elektrischen Monopolen oder von polarisierten Wellen.

Anstelle von erwünschten Verdrehungen von Körperpartien des Sportlers relativ zueinander kann selbstverständlich überwacht werden, ob zwei Körperpartien eine vorgegebene Lage zueinander auch während der Bewegung einhalten. Dies wäre beispielsweise für den Golfsport von Bedeutung, wo während des Golfschwunges der Kopf ruhig gehalten werden soll. Diese korrekte Kopfhaltung könnte etwa mittels einer Stabantenne auf der Golfkappe oder auch einem allfälligen Ohr- bzw. Kopfhörer der Trainings-Vorrichtung selbst und einem zweiten Funkempfänger/-sender beispielsweise am Körper des Sportlers bzw. dessen Schuhen überwacht werden. Auch eine Überwachung durch einen einzigen Inertialsensor, der wieder an einer Kopfbedeckung des Sportlers oder am Ohr-bzw. Kopfhörer vorgesehen sein kann, ist möglich.

## Patentansprüche

1. Trainings-Vorrichtung für Sportarten, bei welchen ein Ball od. dgl. mit einem Schläger od. dgl. gespielt wird, umfassend einen programmierbaren Mikrocomputer und eine Akustikeinrichtung in einem Gehäuse in Form einer Armbanduhr, und zumindest eine Eingabeeinrichtung, bei welcher zumindest ein Teil zum Starten des Programmablaufes des Mikrocomputers durch einen Druckschalter in einer über einen Finger des Sportlers stülpbaren Kappe gebildet ist, wobei der Mikrocomputer über die Eingabeeinrichtung zur Ausgabe von sportspezifische Bewegungsabläufe vorgebenden akustischen Signalen über die akustischen Ausgabeeinrichtungen, vorzugsweise Kopfhörer oder Ohrhörer, und zur Veränderung dieser Signale in Dauer, Abstand und Qualität ansteuerbar ist, **dadurch gekennzeichnet, daß** die Akustikeinrichtung einen Sprachgenerator zur Erzeugung von zumindest zwei unterschiedlichen Wörtern umfaßt, daß der Druckschalter zur Auslösung des Programmablaufes des Mikrocomputers mit einem Funksender versehen ist, und daß im oder am den Mikrocomputer enthaltenden Gehäuse ein Funkempfänger vorhanden und mit dem Mikrocomputer verbunden ist.

2. Vorrichtung nach Anspruch 1, **dadurch gekennzeichnet, daß** die Wörter von im wesentlichen gleicher Dauer sind.

3. Vorrichtung nach Anspruch 1 oder 2, **dadurch gekennzeichnet, daß** der Kopfhörer oder Ohrhörer mit einem Funkempfänger versehen und ein entsprechender Funksender im oder am Gehäuse vorgesehen ist.

4. Vorrichtung nach einem der vorhergehenden Ansprüche, **dadurch gekennzeichnet, daß** am Gehäuse zumindest eine optische Anzeigeeinrichtung für den Bewegungsablauf vorgesehen und mit dem Mikrocomputer über einen entsprechenden Anzeigetreiber verbunden ist.

5. Vorrichtung nach Anspruch 4, **dadurch gekennzeichnet, daß** weitere optische Anzeigen für weitere Spielparameter, beispielsweise die Spieldauer, vorgesehen sind.

6. Vorrichtung nach einem der vorhergehenden Ansprüche, **dadurch gekennzeichnet, daß** im oder am Gehäuse ein Neigungs-, Beschleunigungs- oder Fliehkraftsensor vorgesehen und mit dem Mikrocomputer verbunden ist, welcher ein Programm enthält, das aus den Daten dieses Sensors verschiedene sportspezifische Werte errechnet und die Ausgabe- bzw. Anzeigeeinrichtungen zur akustischen und/oder optischen Ausgabe dieser Werte ansteuert.

7. Vorrichtung nach einem der vorhergehenden Ansprüche, **dadurch gekennzeichnet, daß** die über den Finger stülpbare Kappe mit dem Teil der Eingabeeinrichtung Teil eines Handschuhs, beispielsweise eines Fingers dieses Handschuhs, ist.

8. Trainings-System für Sportarten, bei welchen ein Ball od. dgl. mit einem Schläger od. dgl. gespielt wird, umfassend eine Vorrichtung gemäß einem der Ansprüche 1 bis 7, **gekennzeichnet durch** einen ersten, vorzugsweise batteriebetriebenen Funksender mit Stabantenne, welche mittels Hafteinrichtungen auf der Kleidung des Sportlers anbringbar ist, und einem zweiten, davon beabstandeten Funkempfänger/-sender zum Empfang der Signale des ersten Funksenders und zur Weiterleitung an den Mikrocomputer der Trainings-Vorrichtung, wobei der Mikrocomputer ein Programm enthält, das aus der Stärke der Signale zwischen Funksender und Funkempfänger/-sender die relative Ausrichtung dieser beiden Teile zueinander berechnet und die Ausgabe- bzw. Anzeigeeinrichtungen zur akustischen und/oder optischen Ausgabe dieser Werte ansteuert.

9. System nach Anspruch 8, **gekennzeichnet durch** einen vorzugsweise transportablen externen, zumindest aber zeitweilig stationären Funkempfänger/-sender, beispielsweise an oder in einer Sporttasche.

10. System nach Anspruch 8, **gekennzeichnet durch** einen zweiten Funkempfänger/-sender, der mittels Hafteinrichtungen od. dgl. an der Kleidung des Sportlers anbringbar ist.

11. Trainings-System für Sportarten, bei welchen ein Ball od. dgl. mit einem Schläger od. dgl. gespielt wird, umfassend eine Vorrichtung gemäß einem der Ansprüche 1 bis 7, **gekennzeichnet durch** einen Inertialsensor und einen damit verbundenen, vorzugsweise batteriebetriebenen Funksender zur Übermittlung der Werte des Inertialsensors an den Mikrocomputer, wobei der Inertialsensor mittels Hafteinrichtungen auf der Kleidung des Sportlers anbringbar ist und wobei der Mikrocomputer ein Programm enthält, das aus der Veränderung der Signale des Inertialsensors dessen Lageveränderung berechnet und die Ausgabe- bzw. Anzeigeeinrichtungen zur akustischen und/oder optischen Ausgabe dieser Werte ansteuert.

## Claims

1. A training apparatus for the types of sport in which a ball or the like is played with a racket or the like, comprising a programmable microcomputer and an acoustic device in a housing having the shape of a wrist watch, and at least one input device at least one component of which that starts the execution of the microcomputer program being designed in the form of a pushbutton with a cap that can be pulled over the finger of the operator; the microcomputer can be controlled via an input device used to generate set acoustic signals indicating specific movements by means of acoustic output devices, preferably a headphone or an inserted earphone, and used to change the duration, interval and quality of said signals, **characterized by** the fact that the acoustic device comprises a voice generator that can produce at least two different words, that the pushbutton used to start the microcomputer program is fitted with a radio transmitter, and that a radio receiver is fitted in or on the housing containing the microcomputer, said radio receiver being connected to said microcomputer.

2. An apparatus according to claim 1, wherein the words are essentially of equal duration in time when spoken.

3. An apparatus according to claim 1 or 2, wherein the headphone or the inserted earphone is fitted with a radio receiver and a corresponding radio transmitter is fixed in or on the housing.

4. An apparatus according to one of the previous claims, wherein at least one optical display device is provided in the housing to show the sequence of movement, said display device being connected to the microcomputer via a corresponding display driver.

5. An apparatus according to claim 4, wherein further optical displays are provided for additional playing parameters, e.g. the playing time.

6. An apparatus according to one of the previous claims, wherein a pitch sensor, an acceleration sensor, or a sensor for centrifugal force is provided in or on said housing, the sensor being connected to said microcomputer, which contains a program that computes various sport-specific values based on the data from the sensor; said program triggers the [acoustic] output device or the display device for the acoustic and/or optical output of said values.

7. An apparatus according to one of the previous claims, wherein the cap that may be pulled over the finger is part of a glove and a component of the display device, e.g. a finger of said glove.

8. A training system for the types of sport in which a ball or the like is played with a racket or the like comprising an apparatus according to one of the claims 1 through 7, **characterized by** a first, preferably battery-powered radio transmitter fitted with a rod antenna - said apparatus may be attached to the clothing of the sportsman by means of an attachment device - and by a second radio transceiver placed at a distance from it for that serves to receive signals from the first radio transmitter and to relay said signals to the microcomputer of the training apparatus; said microcomputer containing a program that computes the relative orientation of said two components to one another on the basis of the strength of the signals transmitted between the radio transmitter and the radio transceiver; said program triggers the [acoustic] output or display devices for the acoustic and/or optical output of these values.

9. A system according to claim 8, **characterized by** a preferably transportable, external, or at least temporary stationary radio transceiver on or in a sports bag, for example.

10. A system according to claim 8, **characterized by** a second radio transceiver that may be attached to the clothing of the sportsman by means of an fastening device or the like.

11. A training system for the types of sport in which a ball or the like is played with a racket or the like, comprising an apparatus according to one of the claims 1 through 7, **characterized by** an inertial sensor and preferably a battery-powered radio transmitter connected to it for the transmission of values from the inertial sensor to the microcomputer; said inertial sensor may be attached to the clothing of the sportsman by means of a fastening device, and the microcomputer contains a program that computes the position changes from the change of the signals from the inertial sensor, and said program triggers the [acoustic] output or display device for the acoustic and/or optical output of these values.

## Revendications

1. Dispositif d'entraînement pour les sports dans lesquels une balle ou semblable est jouée avec une crosse ou semblable, comprenant un micro-ordinateur programmable et une installation acoustique contenue dans un boîtier ayant la forme d'une montre-bracelet et au moins une installation d'entrée dont au moins une partie est destinée à démarrer le déroulement du programme du micro-ordinateur par un interrupteur à poussoir situé dans un capuchon placé sur le doigt du sportif, le micro-ordinateur pouvant être commandé à partir de l'installation d'entrée pour émettre par le biais des installations acoustiques de sortie, de préférence par un casque d'écoute ou des écouteurs, des signaux acoustiques conditionnés par des mouvements spécifiques au sport et pour modifier ces signaux quant à leur durée, intervalle et qualité, **caractérisé par le fait que** l'installation acoustique comprend un synthétiseur de parole capable de produire au moins deux mots différents, que l'interrupteur à poussoir destiné à déclencher le déroulement du programme du micro-ordinateur est équipé d'un émetteur radio et qu'un récepteur radio soit placé sur ou dans le boîtier contenant le micro-ordinateur et qu'il soit relié au micro-ordinateur.

2. Dispositif selon la revendication 1, **caractérisé en ce que** les mots sont quasiment de même longueur.

3. Dispositif selon la revendication 1 ou 2, **caractérisé en ce que** le casque d'écoute ou l'écouteur est muni d'un récepteur radio et qu'un émetteur radio correspondant est prévu sur ou dans le boîtier.

4. Dispositif selon l'une des revendications précédentes, **caractérisé en ce qu'**il est prévu que le boîtier soit muni au moins d'une installation d'affichage optique pour le déroulement du mouvement et que celle-ci soit reliée avec le micro-ordinateur par le biais d'un pilote d'affichage correspondant.

5. Dispositif selon la revendication 4, **caractérisé en ce que** d'autres affichages optiques sont prévus pour d'autres paramètres de jeu comme la durée du jeu.

6. Dispositif selon l'une des revendications précédentes, **caractérisé en ce qu'**un capteur d'inclinaison, d'accélération ou de force centrifuge est prévu sur ou dans le boîtier et que celui-ci est relié au micro-ordinateur qui contient un programme permettant de déterminer sur la base des données de ce capteur différentes valeurs spécifiques au sport et commande les installations de sortie ou d'affichage pour qu'elles éditent lesdites valeurs par voie acoustique et/ou optique.

7. Dispositif selon l'une quelconque des revendications précédentes, **caractérisé en ce que** le capuchon pouvant être enfilé sur le doigt contenant l'élément de l'installation d'entrée fait partie d'un gant, par exemple du doigt de ce gant.

8. Système d'entraînement pour les sports dans lesquels une balle ou semblable est frappée avec une crosse ou semblable, comprenant un dispositif selon l'une quelconque des revendications 1 à 7, **caractérisé par** un premier émetteur radio avec antenne tige, de préférence alimenté avec des piles, pouvant être fixé aux vêtements du sportif grâce à une installation adhésive et un deuxième émetteur/récepteur radio placé à distance pour recevoir les signaux émis par le premier émetteur radio et les transmettre au micro-ordinateur du dispositif d'entraînement, le micro-ordinateur comprenant un programme qui, sur la base de l'intensité des signaux entre l'émetteur radio et l'émetteur/récepteur radio, calcule l'orientation relative de ces deux éléments l'un par rapport à l'autre et commande les installations de sortie et d'affichage pour qu'elles éditent lesdites valeurs par voie acoustique et/ou optique.

9. Système selon la revendication 8, **caractérisé par** un émetteur/récepteur radio externe, de préférence transportable, mais au moins temporairement stationnaire par exemple dans ou sur un sac de sport.

10. Système selon la revendication 8, **caractérisé par** un deuxième émetteur/récepteur radio pouvant être fixé par l'intermédiaire d'une installation adhésive ou semblable aux vêtements d'un sportif.

11. Système d'entraînement pour les sports dans lesquels une balle ou semblable est frappée avec une crosse ou semblable, comprenant un dispositif selon l'une quelconque des revendications 1 à 7, **caractérisé par** capteur inertiel et un émetteur radio relié, de préférence alimenté par des piles, pour la transmission au micro-ordinateur des valeurs émises par le capteur inertiel, le capteur initial pouvant être fixé sur les vêtements du sportif par l'intermédiaire d'une installation adhésive et le micro-ordinateur comprenant un programme qui, sur la base des modifications des signaux du capteur inertiel, calcule la modification de leur position et commande les installations de sortie et d'affichage pour qu'elles éditent lesdites valeurs par voie acoustique et/ou optique.
